# FASCICULE DE BREVET EUROPEEN

(11) **EP 0 577 445 B1**
(45) Date de publication et mention de la délivrance du brevet: **18.12.1996**
(21) Numéro de dépôt: 93401263.4
(22) Date de dépôt: 18.05.1993
(51) Int. Cl.: E04C 1/42, C03B 23/24, C03B 11/10

(54) **Brique en verre diffusant la lumière**
Lichtstreuender Glasbaustein
Light diffusing glass block

(30) Priorité: 03.06.1992 DE 4218215
(43) Date de publication de la demande: 05.01.1994
(73) Titulaire: SAINT-GOBAIN VITRAGE, F-92400 Courbevoie (FR); VEGLA Vereinigte Glaswerke GmbH, D-52066 Aachen (DE)
(72) Inventeur: Willner, Winfried, W-4358 Haltern (DE)
(74) Mandataire: Le Vaguerèse, Sylvain Jacques

(56) Documents cités:
- DE-U- 8 906 770
- FR-A- 1 155 005
- GB-A- 1 059 071
- US-A- 3 096 684

## Description

La présente invention concerne une brique en verre creuse diffusant la lumière, composée de deux demi-briques.

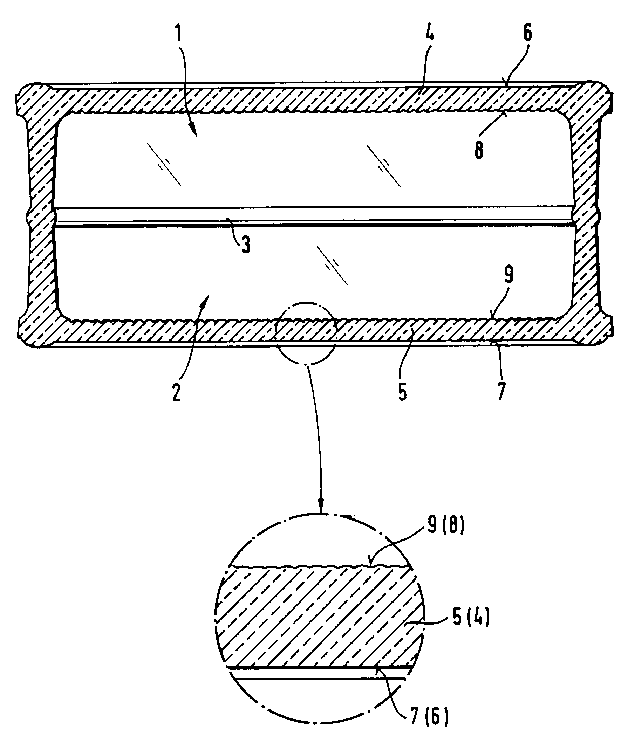

En règle générale, on fabrique des briques en verre creuses en soudant l'une à l'autre deux demi-briques produites par un procédé de pressage. Dans ce cas, il est courant de munir la paroi de l'une ou des deux demi-briques prévue pour le passage de la lumière d'une empreinte ornementale, décorative ou déviant la lumière. De telles briques en verre conservent leur transparence dans une certaine mesure. Par le dessin de l'empreinte, dans de telles briques, la lumière est souvent déviée dans des directions préférentielles déterminées.

On connaît également des briques en verre qui dispersent la lumière de façon diffuse dans une large mesure. Ces briques en verre permettent, lorsqu'elles font partie d'une paroi extérieure d'un bâtiment, un éclairage très uniforme du local indépendamment de l'angle d'incidence des rayons lumineux. Elles ont, en outre, la propriété de restreindre, voire d'empêcher, la transparence tout comme le verre opale.

Une brique en verre connue diffusant la lumière contient, dans la masse du verre, des fines particules, par exemple de sulfate de sodium ou de sulfure de sodium à l'état dispersé (document DE-38 20 600 A1). Dans ce cas, le verre est un verre opale à transparence réduite dans l'ensemble qui, pour une épaisseur du verre de 10 mm est comprise entre 20 et 80 % dans le domaine de longueur d'onde de 400 à 700 nm. De telles briques en verre ne peuvent être fabriquées qu'au moyen de compositions de verre spéciales à teneur en soufre sensiblement accrue. Cependant, le processus de fusion de ces verres est gênant pour l'environnement.

Il est, en outre, connu de fabriquer une brique en verre à dispersion de lumière diffuse en dépolissant, par sablage ou par traitement à l'acide (document DE-GM 1 874 435), la surface extérieure de la paroi destinée au passage de la lumière. De telles surfaces dépolies sont très sensibles à l'encrassement. De plus, elles perdent leur efficacité de diffusion de la lumière lorsqu'elles sont mouillées, par exemple en cas de pluie. Le dépolissage superficiel implique, en outre, une étape de traitement supplémentaire, ce qui augmente inévitablement le coût du produit.

L'invention a pour but de procurer une brique creuse à forte dispersion de lumière diffuse, qui puisse être fabriquée à partir des mêmes compositions de verre que les briques en verre à empreinte ornementale et qui puisse être fabriquée d'une manière particulièrement économique, c'est-à-dire sans étape de traitement supplémentaire. Les surfaces extérieures de la brique en verre doivent, en outre, être insensibles à l'encrassement et insensibles aux influences atmosphériques.

La brique en verre conforme à l'invention est caractérisée en ce que la surface tournée vers l'espace creux de la paroi destinée au passage de la lumière d'au moins une des demi-briques formant la brique complète est pourvue d'un gaufrage superficiel fait d'un motif à profil ondulé dont la longueur d'onde est comprise entre 200 et 1000 µm et dont la profondeur d'onde est comprise entre 10 et 80 µm.

La brique en verre conforme à l'invention est pourvue, du côté extérieur, d'un gaufrage si fin que l'impression visuelle et l'efficacité optique de la surface rendue rugueuse, c'est-à-dire la surface dépolie, ne sont pas altérées bien qu'il s'agisse d'une surface gaufrée qui n'a pas subi de traitement superficiel ultérieur. Comparativement à des surfaces de verre rendues rugueuses a posteriori par voie mécanique, la surface de verre gaufrée conforme à l'invention est comme telle, en substance, moins sensible car la surface du verre, en dépit de sa structure fine, ne présente pas d'écorchure microscopique superficielle. Cependant, il est particulièrement avantageux que la surface dispersant la lumière se trouve du côté intérieur de la brique en verre creuse. Cela signifie que la surface dépolie est protégée de façon durable et qu'elle n'est soumise à aucune influence mécanique défavorable, par exemple, lors d'un nettoyage ou d'une exposition aux intempéries. De plus, aucune mesure de préparation ou de protection particulière n'est nécessaire, ni lors du transport, ni lors de l'incorporation des briques en verre dans une construction et le nettoyage des briques en verre ornementales connues, à l'aide des appareils et des agents de nettoyage courants.

Le profil ondulé du dessin superficiel gaufré a, de préférence, une longueur d'onde de 400 à 800 µm et, en particulier, de 300 à 600 µm, tandis que la profondeur des ondes est, de préférence, comprise entre 20 et 50 µm.

Le gaufrage superficiel des briques selon l'invention peut également présenter un motif apériodique notamment de longues surélévations et de creux étroits sans direction préférentielle.

Les briques en verre conformes à l'invention sont faites d'un verre de composition courante pour des briques de verre. Leur fabrication s'effectue également de manière habituelle par pressage de chaque demi-brique au moyen d'une matrice et d'un poinçon de pressage, puis par assemblage par soudure des deux demi-briques.

Pour obtenir la structure superficielle souhaitée sur la surface interne des demi-briques, on utilise un poinçon de pressage dont la face présentant la structure gaufrée est traitée par un procédé d'érosion, en particulier par électroérosion ou par sablage, les conditions d'érosion étant sélectionnées de telle manière que la structure superficielle décrite soit atteinte. La structure superficielle souhaitée est, de préférence, produite sur le poinçon de pressage par électroérosion au moyen d'une machine adéquate, les conditions d'érosion étant réglées, par exemple, de telle façon que d'après VDI 3400, on obtienne une structure superficielle à profondeur de rugosité 36.

La surface de la brique en verre pourvue de la structure rugueuse décrite peut être une surface plane. Dans ce cas, la brique en verre donne l'impression d'une brique en verre opale à surfaces lisses. L'effet de diffusion de la lumière souhaité peut cependant être produit également dans des briques en verre qui présentent une structure ornementale ou une autre structure simple. Dans ce cas, les surfaces du poinçon présentant la structure ornementale ou la structure simple sont pourvues, en outre, de la structure rugueuse conforme à l'invention obtenue par un traitement d'érosion correspondant.

Une brique en verre conforme à l'invention est représentée, en coupe, sur le dessin.

La brique en verre est formée des deux demi-briques 1 et 2 dont les ailes sont reliées l'une à l'autre par le joint soudé 3. Les parois 4 et 5 de la brique en verre destinées au passage de la lumière présentent, sur leurs surfaces 6 et 7 tournées vers l'extérieur, une surface plane et lisse qui est obtenue grâce au fait que la surface correspondante de la matrice de pressage présente une surface polie et plane. Les surfaces 8 et 9 de la paroi 4 et 5 tournées vers l'intérieur creux de la brique en verre présentent la structure fine conforme à l'invention.

Les surfaces 8 et 9 sont, par exemple, pourvues d'une structure rugueuse à profil ondulé qui ne présente comme telle pas de direction préférentielle et est formée par des surélévations longitudinales et des creux étroits. La longueur d'onde du profil, c'est-à-dire la distance entre deux creux, est située dans le domaine compris entre 300 et 600 µm et la profondeur d'onde est au maximum d'environ 50 µm. Etant donné que les surfaces 8 et 9 présentant cette structure rugueuse sont par ailleurs planes, la déviation ou la dispersion des rayons lumineux provient exclusivement de la structure fine des surfaces 8 et 9.

Une brique en verre ainsi conçue présente, dans le cas de l'épaisseur de paroi habituelle de ces briques et de la composition de verre courante, une transmission globale de la lumière d'environ 80 %. Dans le cas de la structure fine décrite à titre d'exemple, 56 % de la lumière traversant la brique en verre sont dispersés de façon diffuse tandis que 44 % de l'ensemble de la lumière traversent la brique en verre sans modification de la direction du rayonnement.

## Revendications

1. Brique en verre creuse à dispersion de lumière diffuse composée de deux demi-briques (1, 2), caractérisée en ce que la surface (8, 9) tournée vers l'espace creux de la paroi (4, 5) prévue pour le passage de la lumière d'au moins une des demi-briques formant la brique en verre est pourvue d'un gaufrage superficiel fait d'un dessin à profil ondulé de longueur d'onde comprise entre 200 et 1000 µm et de profondeur d'onde comprise entre 10 et 80 µm.

2. Brique en verre creuse suivant la revendication 1, caractérisée en ce que le gaufrage superficiel est constitué d'un dessin apériodique de longues surélévations et de creux étroits sans direction préférentielle.

3. Brique en verre creuse suivant la revendication 1 ou 2, caractérisée en ce que le profil ondulé du dessin superficiel gaufré présente une longueur d'onde de 400 à 800 µm, de préférence de 300 à 600 µm, et une profondeur d'onde de 20 à 50 µm.

4. Brique en verre creuse suivant l'une quelconque des revendications 1 à 3, caractérisée en ce que la paroi (4, 5) pourvue du gaufrage superficiel est plane et parallèle à la surface extérieure (6, 7).

5. Brique en verre creuse suivant l'une quelconque des revendications 1 à 3, caractérisée en ce que la paroi pourvue de l'empreinte superficielle présente, en outre, une structure simple ayant la forme d'un ornement, d'un décor ou de surélévations et/ou de creux déviant la lumière.

6. Brique en verre creuse suivant l'une quelconque des revendications 1 à 5, caractérisée en ce que les deux demi-briques (1, 2) sont soudées l'une à l'autre.

7. Brique en verre creuse suivant l'une quelconque des revendications 1 à 6, caractérisée en ce que les deux demi-briques sont collées l'une à l'autre.

8. Procédé pour la fabrication d'une brique en verre creuse suivant l'une quelconque des revendications 1 à 7, caractérisé en ce que les demi-briques sont fabriquées selon un procédé de pressage à l'aide d'un poinçon dont la face gaufrant la surface intérieure de la paroi prévue pour le passage de la lumière est pourvue grâce à un procédé d'électroérosion d'une structure correspondant à la structure superficielle de la paroi de la brique en verre.

9. Procédé pour la fabrication d'une brique en verre creuse suivant l'une quelconque des revendications 1 à 7, caractérisé en ce que les demi-briques sont fabriquées selon un procédé de pressage à l'aide d'un poinçon dont la face gaufrant la surface intérieure de la paroi prévue pour le passage de la lumière est pourvue, grâce à un procédé de sablage, d'une structure correspondant à la structure superficielle de la paroi de la brique en verre.

## Patentansprüche

1. Aus zwei Halbsteinen (1,2)zusammengesetzter hohler Glasstein mit diffuser Lichtstreuung, **dadurch gekennzeichnet**, daß die dem Hohlraum zugewandte Oberfläche (8,9) der für den Lichtdurchtritt bestimmten Wand (4,5) wenigstens eines der den Glasstein bildenden Halbsteine mit einer Oberflächenprägung aus einem Muster mit wellenförmigem Profil versehen ist, dessen Wellenlänge 200 bis 1000 µm und dessen Wellentiefe 10 bis 80 µm betragen.

2. Hohler Glasstein, nach Anspruch 1, dadurch gekennzeichnet, daß die Oberflächenprägung aus einem aperiodischen Muster von langen Bergrücken und schmalen Tälern ohne Vorzugsrichtung besteht.

3. Hohler Glasstein nach Anspruch 1 oder 2, dadurch gekennzeichnet, daß das wellenförmige Profil des geprägten Oberflächenmusters eine Wellenlänge von 400 bis 800 µm, vorzugsweise 300 bis 600 µm, und eine Wellentiefe von 20 bis 50 µm aufweist.

4. Hohler Glasstein nach einem der Ansprüche 1 bis 3, dadurch gekennzeichnet, daß die mit der Oberflächenprägung versehene Wand (4,5) eben ist und parallel zu der Außenfläche (6,7) verläuft.

5. Hohler Glasstein nach einem der Ansprüche 1 bis 3, dadurch gekennzeichnet, daß die mit der Oberflächenprägung versehene Wand zusätzlich eine Grobstruktur in Form eines Ornaments, eines Dekors oder von lichtlenkenden Erhebungen und/oder Vertiefungen aufweist.

6. Hohler Glasstein nach einem der Ansprüche 1 bis 5, dadurch gekennzeichnet, daß die beiden Halbsteine (1,2) miteinander verschweißt sind.

7. Hohler Glasstein nach einem der Ansprüche 1 bis 6, dadurch gekennzeichnet, daß die beiden Halbsteine miteinander verklebt sind.

8. Verfahren zur Herstellung eines hohlen Glassteins nach einem der Ansprüche 1 bis 7, dadurch gekennzeichnet, daß die Halbsteine nach einem Preßverfahren mit Hilfe eines Preßstempels hergestellt werden, dessen die innere Oberfläche der für den Lichtdurchtritt bestimmten Wand prägende Oberfläche nach einem Funkenerosionsverfahren mit einer der Oberflächenstruktur der Wand des Glassteins entsprechenden Struktur versehen ist.

9. Verfahren zur Herstellung eines hohlen Glassteins nach einem der Ansprüche 1 bis 7, dadurch gekennzeichnet, daß die Halbsteine nach einem Preßverfahren mit Hilfe eines Preßstempels hergestellt werden, dessen die innere Oberfläche der für den Lichtdurchtritt bestimmten Wand prägende Oberfläche mit Hilfe des Sandstrahlverfahrens mit einer der Oberflächenstruktur der Wand des Glassteins entsprechenden Struktur versehen ist.

## Claims

1. Hollow glass brick with dispersion of diffused light, composed of two half-bricks (1, 2), characterized in that the surface (8, 9) towards the hollow space of the wall (4, 5) intended for the passage of the light of at least one of the half-bricks forming the glass brick is provided with a surface embossing made from a design having an undulating profile with a wavelength between 200 and 1000 µm and a wave height of between 10 and 80 µm.

2. Hollow glass brick according to claim 1, characterized in that the surface embossing is constituted of an aperiodic design with long raised zones and narrow hollows without preferential direction.

3. Hollow glass brick according to claim 1 or 2, characterized in that the undulating profile of the embossed surface design has a wavelength of 400 to 800 µm, preferably of 300 to 600 µm, and a wave height of 20 to 50 µm.

4. Hollow glass brick according to any one of claims 1 to 3, characterized in that the wall (4, 5) provided with the surface embossing is plane and parallel to the outer surface (6, 7).

5. Hollow glass brick according to any one of claims 1 to 3, characterized in that the wall provided with the surface imprint has, in addition, a single structure possessing the form of an ornament, a decoration or raised zones and/or hollows deflecting the light.

6. Hollow glass brick according to any one of claims 1 to 5, characterized in that the two half-bricks (1, 2) are welded to one another.

7. Hollow glass brick according to any one of claims 1 to 6, characterized in that the two half-bricks are glued to one another.

8. Method for the production of a hollow glass brick according to any one of claims 1 to 7, characterized in that the half-bricks are manufactured by a pressing process using a male mould or die, of which the face embossing the inner surface of the wall intended for the-passage of the light is provided, by means of an electro-erosion process, with a structure corresponding to the surface structure of the wall of the glass brick.

9. Method for the production of a hollow glass brick according to any one of claims 1 to 7, characterized in that the half-bricks are manufactured by a pressing process by means of a male mould or die, of which the surface embossing the inner face of the wall intended for the passage of the light is provided, by means of a sand-blasting process, with a structure corresponding to the surface structure of the wall of the glass brick.
